# FASCICULE DE BREVET EUROPEEN

(11) **EP 4 038 460 B1**
(45) Date de publication et mention de la délivrance du brevet: **31.07.2024**
(21) Numéro de dépôt: 20776208.9
(22) Date de dépôt: 30.09.2020
(51) Int. Cl.: G05B 19/418

(54) **PROCEDE DE MISE EN ROUTE POUR MACHINE MULTI-MODULES**
ANLAUFVERFAHREN FÜR EINE MEHRMODULMASCHINE
START-UP METHOD FOR MULTI-MODULE MACHINE

(30) Priorité: 03.10.2019 FR 1910946
(43) Date de publication de la demande: 10.08.2022
(73) Titulaire: Sidel Participations, 76930 Octeville-sur-Mer (FR)
(72) Inventeur: SANTAIS, Franck, 76930 OCTEVILLE SUR MER (FR)
(74) Mandataire: Sidel Group
(86) Numéro de dépôt international: PCT/EP2020/077385
(87) Numéro de publication internationale: WO 2021/064031

(56) Documents cités:
- EP-A1- 2 793 353
- US-A- 4 736 116
- US-A1- 2005 131 552

## Description

Le domaine de l'invention est celui de la conception et de la fabrication de récipients en matière plastique.

Plus précisément, l'invention concerne un procédé de mise en route d'une machine de fabrication de récipients en matière plastique.

La fabrication de récipients en matière plastique est réalisée dans une machine comprenant plusieurs modules, par transformation d'une préforme en un récipient final.

Classiquement, une telle machine de fabrication comprend différents modules parmi lesquels au moins un module de chauffe, un module de soufflage, un module de décontamination, un module de remplissage et un module de bouchage des récipients après remplissage.

Par ailleurs, des modules de convoyage sont intercalés entre les modules précités pour permettre le transfert des récipients ou des préformes entre les différentes unités.

Plus précisément, un récipient est fabriqué par chauffage d'une préforme qui est ensuite soufflée pour former un récipient à sa forme définitive. Le récipient formé ou la préforme formée peut être ensuite décontaminé(e) puis rempli(e) et bouché(e) avant d'être étiqueté(e) et palettisé(e) le cas échéant.

Lors du démarrage d'une machine, il est classique que l'intégralité des modules soient démarrés en même temps jusqu'à ce que chaque module atteigne des conditions de fonctionnement optimal permettant alors de lancer la production.

Cependant, on constate que chaque module ne présente pas un temps de mise en marche identique aux autres modules.

Dans l'art antérieur, lors du démarrage d'une machine, tous les modules qui composent la machine sont mis en route en même temps et atteignent leurs conditions de fonctionnement optimal, chacun à un instant différent.

Il résulte de cette mise en oeuvre deux inconvénients majeurs.

Premièrement, lorsque tous les modules sont lancés en même temps, tous les modules n'atteignent que rarement, voire jamais, leurs conditions de fonctionnement optimal en même temps.

Dès lors, certains, modules qui sont plus rapides à atteindre leurs conditions de fonctionnement optimal, sont maintenus en fonctionnement à vide, ce qui augmente leur fatigue de manière prématurée et également la consommation en énergie de la machine.

Deuxièmement, la montée en cadence jusqu'à l'atteinte des conditions de fonctionnement optimal, peut provoquer pour certains modules un risque de stress mécanique, également appelé sur-contrainte mécanique.

En effet, pour que la machine soit opérationnelle le plus rapidement possible, certains modules sont démarrés de manière brutale, c'est-à-dire avec des rampes d'accélération importantes, si bien que des contraintes mécaniques peuvent apparaître et, dans le temps, provoquer une détérioration voire une panne du module et/ou un vieillissement prématuré de certaines pièces.

Ces inconvénients sont d'autant plus vrais dans le cas d'un redémarrage d'une machine suite à un arrêt d'urgence.

En effet, certains modules peuvent être prêts plus rapidement que d'autres et doivent attendre avant d'être utilisés. Ainsi, des modules qui ont un temps de chauffe ou de mise en route particulièrement long peuvent être sur-contraints pour réduire le temps de mise en route de la machine et donc présenter des risques de détérioration importants. On connait également le document EP2793353 A1 qui décrit un procédé de démarrage d'une machine comprenant une pluralité de modules, chaque module présentant une durée standard de montée en régime jusqu'à l'obtention de conditions de fonctionnement optimal, ledit procédé présentant les mêmes inconvénients.

L'invention a notamment pour objectif de pallier les inconvénients de l'art antérieur.

Plus précisément, l'invention a pour objectif de proposer un procédé de démarrage d'une machine permettant de limiter les risques de dégradation des modules composant la machine lors de son démarrage.

L'invention a également pour objectif de fournir un tel procédé de démarrage qui permette d'accroître la durée de vie des différents modules composant la machine.

L'invention a en outre pour objectif de fournir un tel procédé de démarrage qui permette de contrôler et d'adapter le temps de démarrage jusqu'aux conditions de fonctionnement optimal de la machine.

Ces objectifs, ainsi que d'autres qui apparaîtront par la suite, sont atteints grâce à l'invention qui a pour objet un procédé de démarrage d'une machine comprenant une pluralité de modules, chaque module présentant une durée standard de montée en régime jusqu'à l'obtention de conditions de fonctionnement optimal, caractérisé en ce que le procédé comprend les étapes :
- d'acquisition pour chaque module d'un état initial de régime à un instant T0 et une durée de montée en régime pour atteindre les conditions de fonctionnement optimal à partir de l'instant T0 ;
- d'identification d'un module lent ayant la durée de montée en régime la plus longue et déterminant un instant T1 de fonctionnement optimal, à l'issue de la montée en régime, auquel ledit module lent présente ses conditions de fonctionnement optimal ;
- d'établissement, pour chaque module autre que le module lent, d'une consigne de départ ou de durée de montée en régime pour laquelle ses conditions de fonctionnement optimal sont atteintes seulement à l'instant T1 ou au voisinage immédiat de l'instant T1.

Par l'établissement d'une telle consigne de départ ou de durée de montée en régime spécifique à chaque module, les consommations énergétiques et l'usure prématurée des modules sont diminuées.

En effet, en utilisant pour chaque module une consigne de départ ou de durée de montée en régime, chaque module peut être amené à ses conditions de fonctionnement optimal de manière « douce », c'est-à-dire non brutalement.

Par ailleurs, la consommation énergétique peut être progressive pour chaque module ou limitée à l'utilisation réelle du module, c'est-à-dire à son lancement nominal ou à son utilisation réelle.

Avantageusement, postérieurement à l'étape d'acquisition et préalablement à l'étape d'identification, le procédé comprend les étapes :
- de détection d'un état de montée en régime intermédiaire d'au moins un module ;
- de détermination d'une durée restante de montée en régime pour chaque module.

Cela permet d'adapter la mise en route en fonction des conditions réelles de ma machine de fabrication.

En effet, lorsqu'une machine est arrêtée entre deux cycles de fabrication, son temps de mise en marche est inférieur au temps de mise en marche d'une machine dite froide, c'est-à-dire d'une machine au repos depuis plusieurs heures voire plusieurs jours.

Préférentiellement, préalablement à l'identification du module lent, le procédé comprend également une étape d'acquisition pour chaque module d'une consigne de modification temporaire de sa durée de montée en régime pour atteindre les conditions de fonctionnement optimal à partir de l'instant T0.

Cela permet notamment de ne mettre en marche une machine de fabrication que partiellement par exemple. Un intérêt particulier d'une mise en marche partielle d'une machine de fabrication existe lors d'un contrôle de fiabilité après une opération de maintenance par exemple.

A titre d'exemple, un module particulier peut être mis en marche indépendamment des autres dans des conditions de fonctionnement dégradées pour en vérifier sa bonne réparation.

En outre, cela permet de mettre en marche une machine de fabrication de manière lente afin de surveiller son bon fonctionnement de manière lente et continue puis d'augmenter sa vitesse d'exécution jusqu'à ses conditions de fonctionnement nominal.

De préférence, lors de l'établissement de chaque consigne de départ ou de durée de montée en régime, le procédé comprend une étape prise en considération de paramètres de production de la machine.

Pour une production à faible cadence, le temps de mise en marche de la machine de fabrication peut alors être rallongé tandis que pour une cadence élevée le temps de mise en marche peut être raccourci ou, à tout le moins, optimisé au plus court.

Avantageusement, lors de l'établissement de chaque consigne de montée en régime, le procédé comprend une étape de prise en considération de paramètres climatiques externes à la machine.

En effet, les conditions extérieures peuvent influencer le temps de mise en marche de la machine.

A titre d'exemple, une humidité élevée peut entraîner un patinage de deux pièces en mouvement l'une sur l'autre ou une température élevée peut demander un temps de chauffe réduit d'une unité de chauffe de préformes.

Selon une première forme de réalisation, le procédé comprend une étape de transmission d'une consigne de départ ou de durée de montée en régime réalisée de manière simultanée à chaque module.

Cela permet de simplifier la transmission des informations entre une unité informatique de pilotage de la machine et l'ensemble des modules.

Selon une deuxième forme de réalisation, le procédé comprend une étape de transmission d'une consigne de départ ou de durée de montée en régime réalisée de manière différée à chaque module.

Dans ce cas, un opérateur peut conserver une main mise sur le déroulement du lancement de la machine et, le cas échéant, piloter manuellement la mise en marche de l'un des modules en particulier de la machine de fabrication.

D'autres caractéristiques et avantages de l'invention apparaîtront plus clairement à la lecture de la description du mode de réalisation préférentielle de l'invention, données à titre d'exemple illustratif et non limitatif, et des dessins annexés parmi lesquels :
- [Fig. 1] est une représentation schématique d'une machine de fabrication selon l'invention ;
- [Fig. 2] est une vue schématique illustrant la montée en régime de trois modules d'une machine de fabrication, selon des premières conditions ;
- [Fig. 3] est une représentation schématique illustrant la montée en régime de trois modules d'une machine de fabrication, selon des deuxièmes conditions.

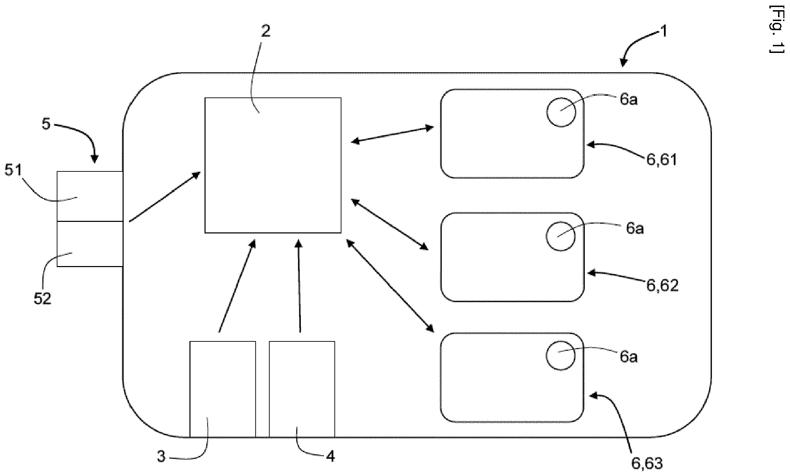

La figure 1 illustre de manière schématique une machine 1 de fabrication de récipients en matière plastique selon l'invention, la machine 1 comprenant :
- un calculateur 2 ;
- un arrêt d'urgence 3 ;
- des moyens de stockage mémoire 4 ;
- des capteurs 5, et
- une pluralité de modules 6 pour la fabrication de récipients.

Plus précisément, tel que cela est illustré de manière non limitative sur la figure 1, la machine de fabrication comprend trois modules 6 à savoir un premier module 61, un deuxième module 62 et un troisième module 63.

Le premier module 61 est par exemple une unité de chauffe de préformes, le deuxième module 62 est par exemple une unité de transfert, le troisième module 63 est par exemple une unité de formage des récipients.

Lors de la fabrication des récipients, des préformes sont d'abord introduites dans le premier module 61, à savoir l'unité de chauffe afin que leur matière plastique constitutive soit ramollie et atteigne une température de transition vitreuse à laquelle la matière plastique peut être soufflée.

Lorsque les préformes ont atteint la température idéale, elles sont alors dirigées vers l'unité de fabrication via l'unité de transfert.

A titre d'exemple, l'unité de transfert comprend une roue portant des moyens de préhension destinés à récupérer chaque préforme sortant de l'unité de chauffe, c'est-à-dire du premier module 61, pour la diriger vers le troisième module 63, c'est-à-dire l'unité de formage.

L'unité de formage présente alors un carrousel portant une pluralité de moules à l'intérieur desquels des préformes sont introduites pour être soufflées et adopter leur forme finale, ou quasiment.

Lors du démarrage de la machine, chacun des modules 6 présente un temps de démarrage qui lui est propre.

Le temps de démarrage est calculé à partir de conditions initiales auxquelles le module 6 est mis en marche jusqu'à ce que ce dernier atteigne des conditions fonctionnement optimal.

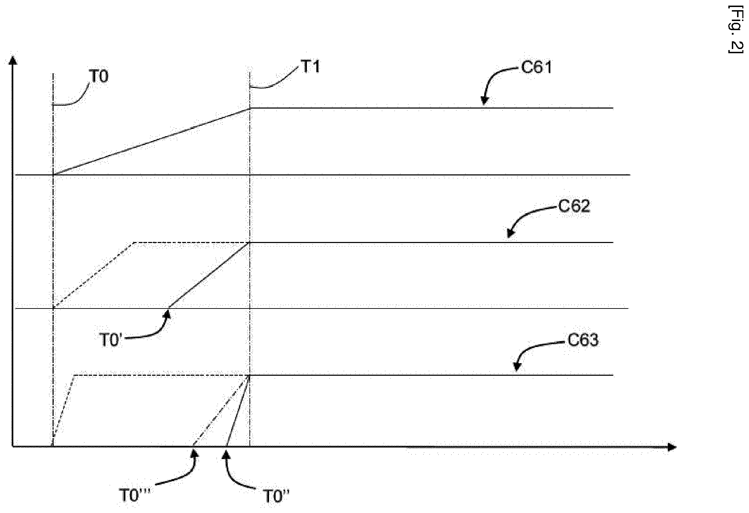

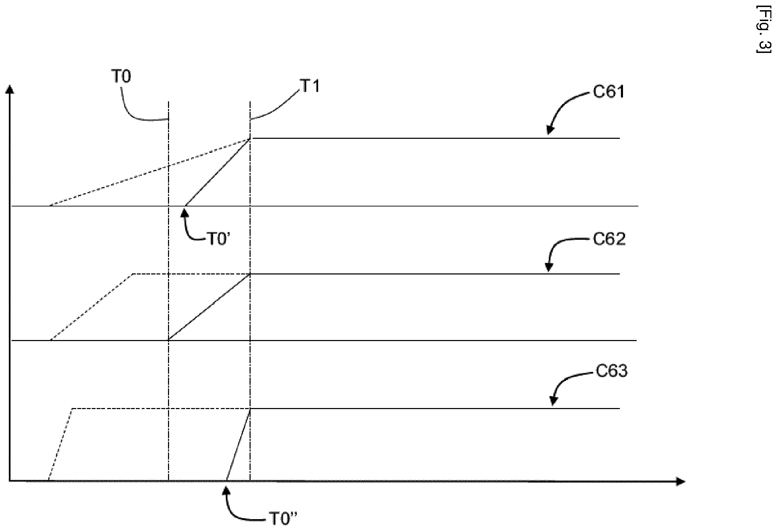

Les figures 2 et 3 illustrent des chronogrammes de montée en régime des modules 6. Les données numériques de ces chronogrammes sont données à titre d'exemple illustratif et non limitatif.

Plus précisément, les figures 2 et 3 montrent :
- une première courbe C61 représentant la montée en régime du premier module 61 ;
- une deuxième courbe C62 représentant la montée en régime du deuxième module 62,
- une troisième courbe C63 représentant la montée en régime du troisième module 63.

Selon un premier exemple, et en référence à la figure 2, le premier module 61, c'est-à-dire l'unité de chauffe, présente un temps de démarrage d'environ 30 secondes.

Le deuxième module 62 présente un temps de démarrage d'environ 12 secondes.

Le troisième module 63 présente un temps de démarrage d'environ 5 secondes.

En référence à la figure 2, pour le deuxième module 62 et le troisième module 63, les conditions classiques de mise en route à partir d'un état zéro, c'est-à-dire d'une sortie de veille des modules 6, sont représentées en traits pointillés.

Selon l'art antérieur, lorsque les modules 6 sont mis en marche ou que la machine 1 est démarrée, tous les modules 6 sont démarrés en même temps.

Ainsi, tel qu'on le voit sur la figure 2, le troisième module 63 atteint ses conditions de fonctionnement optimal en premier, suivi du deuxième module 62 et enfin du premier module 61.

Ainsi, le temps de chauffe et de fonctionnement à vide est important jusqu'au lancement de la production pour le deuxième module 62 et le troisième module 63.

Un tel fonctionnement à vide peut provoquer à terme une détérioration des modules 6.

En effet, certains modules 6 sont conçus pour avoir un fonctionnement nominal en charge et, lorsque le fonctionnement nominal est prolongé sans que le module 6 ne soit en charge, les modules 6 peuvent atteindre un régime de surchauffe qui les détériorent prématurément.

Tel que cela est illustré sur la figure 1, chaque module 6 comprend des moyens d'analyse et de communication 6a avec le calculateur 2.

Ainsi, lors du démarrage de la machine 1, ou d'un redémarrage, chaque module 6 communique avec le calculateur 2 pour lui transmettre une durée de montée en régime qui lui est propre.

Le calculateur 2 est alors paramétré pour mettre en oeuvre un procédé de démarrage permettant de limiter l'usure prématurée des différents modules 6.

Pour cela, le procédé comprend les étapes :
- d'acquisition pour chaque module 6 d'un état initial de régime à un instant T0 et une durée de montée en régime pour atteindre les conditions de fonctionnement optimal à partir de l'instant T0 ;
- d'identification d'un module 6 lent ayant la durée de montée en régime la plus longue ;
- d'établissement, pour chaque module 6 autre que le module 6 lent, d'une consigne de départ ou d'une durée de montée en régime.

Plus précisément, le calculateur 2 acquiert de la part de chaque module 2 la durée de montée en régime de ceux-ci pour les comparer et identifier le module 6 le plus lent à atteindre ses conditions de fonctionnement optimal.

Lorsque le module 6 lent est identifié, le calculateur 2 établit, pour chacun des autres modules 6, la consigne de départ ou de durée de montée en régime pour laquelle les conditions de fonctionnement optimal sont atteintes seulement à un instant T1 ou au voisinage immédiat de l'instant T1, c'est-à-dire de l'instant auquel le module 6 lent a lui atteint ses conditions de fonctionnement optimal.

En référence à la figure 2, selon un premier cas de figure, le module 6 le plus lent est le premier module 61, c'est-à-dire l'unité de chauffe.

En effet, à partir d'une mise en route initiale de la machine 1, la température régnant dans l'unité de chauffe est proche ou égale à la température ambiante.

L'unité de chauffe doit donc monter en régime de sorte à atteindre une température voisine de la température de transition vitreuse des préformes, par exemple environ 77°C lorsque les préformes sont réalisées en Polyéthylène Téréphtalate (PET).

Ainsi, la durée de 30 secondes pour la montée en température du four représente la durée la plus importante de tous les modules 6 pour atteindre leurs conditions de fonctionnement optimal.

Selon le premier cas de figure, illustré par les traits pleins sur la figure 2 pour le deuxième module 62 et le troisième module 63, la consigne établie par le calculateur 2 est une consigne de modification du départ de la montée en régime.

En d'autres termes, chaque module 6 conserve sa durée de montée en régime mais l'instant de départ de la montée en régime diffère pour chacun des modules 6.

Ainsi, tel que cela est illustré sur la figure 2, le départ de la montée en régime du premier module 61 est initié à l'instant T0 puis, quelques secondes après, le départ de la montée en régime du deuxième module 62 est initié à un instant T0' et, enfin, le départ de la montée en régime du troisième module 63 est initié à un instant T0".

Ainsi, selon l'axe des temps, chaque module 6 monte en régime à la suite des autres jusqu'à ce que l'ensemble des modules 6 atteigne ses conditions de fonctionnement nominal à l'instant T1.

Selon une variante de ce premier cas de figure, tel qu'illustré par les traits mixtes sur la figure 2 pour le troisième module 63, c'est la durée de montée en régime qui est modifiée par la consigne.

Ainsi, la durée initiale de montée en régime de 5 secondes est par exemple doublée pour atteindre 10 secondes, de sorte que la montée en régime du troisième module se fasse de manière « douce » et lente à partir d'un instant T0‴ antérieur au temps T0".

La consigne de l'instant de départ de la montée en régime du troisième module 63 est donc modifiée pour que le troisième module atteigne ses conditions de fonctionnement nominal à l'instant T1 malgré la modification de sa durée de montée en régime.

La figure 3 illustre un deuxième cas de figure dans lequel la machine 1 de fabrication doit être redémarrée après que l'arrêt d'urgence 3 ait été déclenché.

Chaque module 6 peut présenter une inertie de fonctionnement.

En effet, dans le cas du premier module 61, la baisse de température dans l'unité de chauffe n'est pas immédiate.

A cause de l'inertie thermique, la température décroit dans l'unité de chauffe de manière graduelle et non de manière brutale.

Le procédé, lorsqu'il établit une consigne de modification de la durée de montée en régime d'un module 6, permet une montée en régime lente ou optimisée, de sorte que celui-ci ne soit pas sollicité de manière trop brutale mais dans des conditions prévues à cet effet ou des conditions plus souples.

Ainsi, dans le cas du deuxième module 62, dans lequel une vitesse de rotation et des éléments mobiles entre eux oblige que de la graisse atteigne une température permettant un mouvement fluide entre les deux éléments, le procédé permet d'éviter une transformation chimique de la graisse, par exemple en empêchant celle-ci de se durcir sous l'effet de la chaleur, ou au contraire, de s'évaporer.

La consigne de démarrage adaptée suite au déclenchement de l'arrêt d'urgence 3 est enregistrée temporairement dans les moyens de stockage mémoire 4, de sorte qu'en cas de démarrage classique, c'est-à-dire sans arrêt d'urgence préalable, chaque temps de cycle nominal soit de nouveau utilisé pour permettre le démarrage de la machine 6.

Le stockage des consignes suite au déclenchement de l'arrêt d'urgence 3 est donc temporaire, de sorte qu'en cas de démarrage classique, c'est-à-dire sans déclenchement préalable de l'arrêt d'urgence 3, chaque temps de cycle nominal soit de nouveau utilisé pour permettre le démarrage de la machine 1.

Le déverrouillage de l'arrêt d'urgence 3 permet d'amorcer un nouveau cycle de démarrage de la machine 1.

En référence à la figure 3, l'instant T0 devient alors l'instant auquel l'arrêt d'urgence est déverrouillé. Ainsi, les conditions prises en compte par le calculateur 2 pour la mise en oeuvre du procédé sont les conditions au déverrouillage de l'arrêt d'urgence 3.

Le calculateur 2 prend donc en compte un état de montée en régime de chacun des modules 6 et détermine une durée restante de montée en régime pour chaque module 6.

En référence à la figure 3, il est constaté qu'à l'instant T0, le premier module 61 nécessite un temps de démarrage inférieur à son temps de démarrage nominal à cause de l'inertie thermique.

Le temps de démarrage du premier module 61 devient donc inférieur au temps de démarrage du deuxième module 62 qui reste par exemple constant malgré les circonstances de démarrage de la machine 1.

Ainsi, tel qu'illustré sur la figure 3, à l'instant T0, le module 6 le plus lent devient le deuxième module 62.

Dès lors, le calculateur 2 crée une consigne adaptée de démarrage pour le premier module 61 et le troisième module 63.

Aussi, le démarrage du deuxième module 62 est initié à l'instant T0, le démarrage du premier module 61 est initié à l'instant T0' et le démarrage du troisième module 63 est initié à l'instant T0", les instants T0' et T0" étant postérieurs à l'instant T0.

Préférentiellement, les capteurs 5 permettent notamment d'acquérir des conditions d'évolution de la machine 1, notamment une température externe à la machine 1 par un capteur de température 51, l'hygrométrie de la salle dans laquelle se trouve la machine par un capteur d'hygrométrie 52, ou encore une pression extérieure.

En effet, ces différents paramètres peuvent influencer les durées de montée en régime de chacun des modules 6.

A titre d'exemple, pour le premier module 61, la durée de montée en régime de l'unité de chauffe sera plus importante si la température environnante à la machine 1 est négative, que si la température environnante à la machine 1 est positive.

De préférence, lorsque la consigne est établie, elle est transmise à chacun des modules 6, de manière simultanée pour chaque module 6. En variante, une consigne est transmise individuellement à chacun des modules 6 de manière différée, par exemple au lancement de chaque module 6.

Les différents paramètres tels que la durée standard de montée en régime jusqu'à l'obtention des conditions de fonctionnement optimal de chacun des modules sont notamment stockés dans les moyens de stockage de mémoire 4.

Selon un mode de réalisation avantageux, le procédé comprend également une étape de prise en compte des conditions de production de la machine 1, ces conditions de production, par exemple un volume horaire de fabrication, étant stockées dans les moyens de stockage mémoire 4.

## Revendications

1. Procédé de démarrage d'une machine (1) comprenant une pluralité de modules (6), chaque module (6) présentant une durée standard de montée en régime jusqu'à l'obtention de conditions de fonctionnement optimal, **caractérisé en ce que** le procédé comprend les étapes :
- d'acquisition pour chaque module (6) d'un état initial de régime à un instant T0 et une durée de montée en régime pour atteindre les conditions de fonctionnement optimal à partir de l'instant T0 ;
- d'identification d'un module (6) lent ayant la durée de montée en régime la plus longue et déterminant un instant T1 de fonctionnement optimal, à l'issue de la montée en régime, auquel ledit module (6) lent présente ses conditions de fonctionnement optimal ;
- d'établissement, pour chaque module (6) autre que le module (6) lent, d'une consigne de départ ou de durée de montée en régime pour laquelle ses conditions de fonctionnement optimal sont atteintes seulement à l'instant T1 ou au voisinage immédiat de l'instant T1.

2. Procédé selon la revendication précédente, **caractérisé en ce que** postérieurement à l'étape d'acquisition et préalablement à l'étape d'identification, il comprend les étapes :
- de détection d'un état de montée en régime intermédiaire d'au moins un module (6) ;
- de détermination d'une durée restante de montée en régime pour chaque module(6).

3. Procédé selon l'une quelconque des revendications précédentes, **caractérisé en ce que**, préalablement à l'identification du module (6) lent, il comprend également une étape d'acquisition pour chaque module (6) d'une consigne de modification temporaire de sa durée de montée en régime pour atteindre les conditions de fonctionnement optimal à partir de l'instant T0.

4. Procédé selon l'une quelconque des revendications précédentes, **caractérisé en ce que** lors de l'établissement de chaque consigne de départ ou de durée de montée en régime, le procédé comprend une étape prise en considération de paramètres de production de la machine (1).

5. Procédé selon l'une quelconque des revendications précédentes, **caractérisé en ce que** lors de l'établissement de chaque consigne de montée en régime, le procédé comprend une étape de prise en considération de paramètres climatiques externes à la machine (1).

6. Procédé selon l'une quelconque des revendications précédentes, **caractérisé en ce qu'**il comprend une étape de transmission d'une consigne de départ ou de durée de montée en régime réalisée de manière simultanée à chaque module (6).

7. Procédé selon l'une quelconque des revendications 1 à 5, **caractérisé en ce qu'**il comprend une étape de transmission d'une consigne de départ ou de durée de montée en régime réalisée de manière différée à chaque module (6).

## Patentansprüche

1. Anlaufverfahren für eine Maschine (1) mit einer Vielzahl von Modulen (6), wobei jedes Modul (6) eine Standarddauer für das Hochlaufen bis zum Erreichen optimaler Betriebsbedingungen aufweist, **dadurch gekennzeichnet, dass** das Verfahren die folgenden Schritte aufweist:
- für jedes Modul (6) das Erfassen eines Anfangszustands des Betriebs zu einem Zeitpunkt T0 und einer Dauer für das Hochlaufen bis zum Erreichen der optimalen Betriebsbedingungen ab dem Zeitpunkt T0;
- das Identifizieren eines langsamen Moduls (6) mit der längsten Dauer für das Hochlaufen und das Bestimmen eines optimalen Betriebszeitpunkts T1 am Ende des Hochlaufens, zu dem das langsame Modul (6) seine optimalen Betriebsbedingungen aufweist;
- für jedes Modul (6), das nicht das langsame Modul (6) ist, das Festlegen eines Sollwerts für den Start oder für die Dauer des Hochlaufens, für den seine optimalen Betriebsbedingungen erst zum Zeitpunkt T1 oder in unmittelbarer Nähe des Zeitpunkts T1 erreicht werden.

2. Verfahren nach dem vorhergehenden Anspruch, **dadurch gekennzeichnet, dass** es nach dem Schritt des Erfassens und vor dem Schritt des Identifizierens die folgenden Schritte aufweist:
- das Erkennen eines Zwischenzustands des Hochlaufens von mindestens einem Modul (6);
- das Bestimmen einer verbleibenden Dauer für das Hochlaufen für jedes Modul (6).

3. Verfahren nach einem der vorhergehenden Ansprüche, **dadurch gekennzeichnet, dass** es vor dem Identifizieren des langsamen Moduls (6) auch einen Schritt aufweist, bei dem für jedes Modul (6) ein Sollwert für die vorübergehende Änderung seiner Dauer für das Hochlaufen erfasst wird, um ab dem Zeitpunkt T0 die optimalen Betriebsbedingungen zu erreichen.

4. Verfahren nach einem der vorhergehenden Ansprüche, **dadurch gekennzeichnet, dass** das Verfahren beim Festlegen jedes Sollwerts für den Start oder für die Dauer des Hochlaufens einen Schritt aufweist, bei dem Produktionsparameter der Maschine (1) berücksichtigt werden.

5. Verfahren nach einem der vorhergehenden Ansprüche, **dadurch gekennzeichnet, dass** das Verfahren beim Festlegen jedes Sollwerts für das Hochlaufen einen Schritt zum Berücksichtigen der äußeren klimatische Parameter der Maschine (1) aufweist.

6. Verfahren nach einem der vorhergehenden Ansprüche, **dadurch gekennzeichnet, dass** es einen Schritt zum Übertragen eines Sollwerts für den Start oder für die Dauer des Hochlaufens aufweist, der gleichzeitig an jedem Modul (6) durchgeführt wird.

7. Verfahren nach einem der Ansprüche 1 bis 5, **dadurch gekennzeichnet, dass** es einen Schritt zum Übertragen eines Sollwerts für den Start oder für die Dauer des Hochlaufens aufweist, der zeitversetzt an jedem Modul (6) durchgeführt wird.

## Claims

1. Method of starting a machine (1) comprising a plurality of modules (6), each module (6) having a standard run-up time until optimum operating conditions are obtained, **characterized in that** the method comprises the steps of:
- acquisition for each module (6) of an initial state at a time T0 and a run-up time to reach the optimum operating conditions from the time T0;
- identification of a slow module (6) having the longest run-up time and determining a time T1 of optimum operation, following run-up, at which said slow module (6) has its optimum operating conditions;
- for each module (6) other than the slow module (6), establishing a starting or run-up time set point for which its optimum operating conditions are reached only at the time T1 or in the immediate vicinity of the time T1.

2. Method according to the preceding claim, **characterized in that** after the acquisition step and before the identification step, it comprises the steps of:
- detection of an intermediate run-up state of at least one module (6);
- determination of a remaining run-up time for each module (6).

3. Method according to either one of the preceding claims, **characterized in that**, before the identification of the slow module (6), it also comprises a step of acquisition for each module (6) of a set point for temporary modification of its run-up time to reach the optimum operating conditions from the time T0.

4. Method according to any one of the preceding claims, **characterized in that**, when establishing each starting or run-up time set point, the method comprises a step of taking into consideration production parameters of the machine (1).

5. Method according to any one of the preceding claims, **characterized in that**, when establishing each run-up set point, the method comprises a step of taking into consideration climatic parameters external to the machine (1).

6. Method according to any one of the preceding claims, **characterized in that** it comprises a step of transmission to each module (6) of a starting or run-up time set point produced in a simultaneous manner.

7. Method according to any one of Claims 1 to 5, **characterized in that** it comprises a step of transmission to each module (6) of a starting or run-up time set point produced in a deferred manner.
